# EUROPÄISCHE PATENTSCHRIFT

(11) **EP 0 572 762 B1**
(45) Veröffentlichungstag und Bekanntmachung des Hinweises auf die Patenterteilung: **01.05.1996**
(21) Anmeldenummer: 93102291.7
(22) Anmeldetag: 13.02.1993
(51) Int. Cl.: F16K 31/68, G05D 23/13

(54) **Mischbatterie**
Mixing valve
Robinet mélangeur

(30) Priorität: 04.03.1992 DE 4206703
(43) Veröffentlichungstag der Anmeldung: 08.12.1993
(73) Patentinhaber: FRIEDRICH GROHE AKTIENGESELLSCHAFT, D-58675 Hemer (DE)
(72) Erfinder: Kahle, Dieter, W-5860 Iserlohn (DE)

(56) Entgegenhaltungen:
- EP-A- 0 242 680
- EP-B- 0 153 555
- DE-A- 4 116 954
- DE-C- 593 377

## Beschreibung

Die Erfindung betrifft eine thermostatgeregelte Mischbatterie, insbesondere zum Bereiten von temperiertem Warmwasser für Duschen, Badewannen, Waschbecken o.dgl., mit einem wenigstens je eine Zulauföffnung für das kalte und warme Medium sowie eine Ablauföffnung für das gemischte Medium aufweisenden Gehäuse, in welchem ein von einer Temperaturvorwähleinrichtung stellbarer Thermostat vorgesehen ist, der mit einem zwischen zwei Ventilsitzen für das kalte und warme Medium verschiebbaren Ventilkörper gekoppelt ist, und der Thermostat mit dem Ventilkörper von einer Rückstellfeder in Richtung auf die an einem Kopfstück des Gehäuses mit einer Stellmutter angeordneten Temperaturvorwähleinrichtung gestrammt ist, wobei sich der Thermostat mit einem Stößel, der entsprechend der Umgebungstemperatur des Thermostatfühlbereichs eine axiale Auslenkung erfährt, im Bereich der Stellmutter axial abstützt.
Eine derartige Mischbatterie ist aus der Druckschrift EP 0 242 680 A2 bekannt. Bei der Installation der Versorgungsrohrleitungen für die Mischbatterie kann es vorkommen, daß die Anschlüsse - vorschriftsmäßig rechts Kaltwasser, links Warmwasser - vertauscht werden. Außerdem ist es vielfach üblich, Sanitärräume in Gebäuden spiegelbildlich zueinander anzuordnen, so daß von einer Hauptleitung beide Räume versorgt werden können. Hierbei ist es dann meist erforderlich, durch besondere Ausgleichsrohrleitungen etc., die Anschlüsse vorschriftsmäßig auszubilden. Zur Überwindung der Schwierigkeiten, die durch vertauschte Anschlüsse von Kalt- und Warmwasser oder durch eine Hauptleitung versorgte, spiegelbildlich angeordnete Sanitärräume entstehen, ist es bereits mit der Druckschrift DE 41 16 954 A1 vorgeschlagen worden, einen Mischventileinsatz für den Batteriekörper vorzusehen, bei dem der Stößel des Thermostaten in umgekehrter Richtung auf den Ventilkörper einwirkt. Hierbei ist die Stellbewegung bzw. Relativbewegung zwischen dem Ventilkörper und einem Halte-und Führungsrohr in dem vom Medium beaufschlagten Raum erforderlich. Diese Anordnung von Gleitführungen im vom Medium beaufschlagten Raum ist jedoch anfällig gegen im Medium mitgeführten Partikeln und Ausscheidungen, so daß diese vorbekannte Einrichtung z.B. durch Kalkausscheidungen aus dem Wasser, schon frühzeitig schwergängig werden und/oder frühzeitig verschleißen kann. Hier will die Erfindung Abhilfe schaffen.

Der Erfindung liegt die Aufgabe zugrunde, die eingangs aufgeführten Mischbatterien zu verbessern und so auszubilden, daß bei seitenverkehrtem Anschluß der Versorgungsleitungen des kalten und warmen Mediums die gleiche Funktion erfüllt werden kann, oder daß bei vorschriftsmäßig installierten Anschlüssen des kalten und warmen Mediums das thermostatgeregelte Mischventil in der Mischbatterie an der gegenüberliegenden Seite, der linken Seite, des Batteriegehäuses anordbar ist.

Diese Aufgabe wird erfindungsgemäß dadurch gelöst, daß zwischen der Stellmutter und dem Stößel außerhalb des vom Medium beaufschlagten Raums eine Umkehrvorrichtung für die axiale Auslenkbewegung des Stößels vorgesehen ist, so daß die Axialbewegung in umgekehrter Richtung an der Stellmutter zur Wirkung gelangt.
Weitere Ausgestaltungen der Erfindung sind in den Ansprüchen 2 bis 18 angegeben.

Mit den vorgeschlagenen Maßnahmen wird insbesondere erreicht, daß die Gleitführungen und Dichtungen weitgehend aus dem vom Medium beaufschlagten Raum herausgenommen werden können, so daß eine relativ hohe Lebensdauer und eine gleichbleibende Funktionstüchtigkeit erzielbar ist. Dabei kann die Temperaturvorwähleinrichtung sowohl mit einem steigenden als auch einem nichtsteigenden Griffstück versehen werden. Auch kann die Temperaturwähleinrichtung mit dem Mischventil an der linken Seite des Mischbatteriegehäuses angeordnet werden, wobei eine einfache Gestaltung der Wasserwege in dem Batteriekörper ermöglicht ist.
Die vorgeschlagenen Maßnahmen können mit relativ geringen Änderungen an bereits in Produktion befindlichen und vertriebenen Mischventilkartuschen (EP 0 242 680 A2) verwirklicht werden.
Die erfindungsgemäße Umkehrvorrichtung kann mit Hilfe von Kipphebeln, Rollkörpern oder hydraulisch arbeitenden Einrichtungen verwirklicht werden.

Ausführungsbeispiele der Erfindung sind in der Zeichnung dargestellt und wird im folgenden näher beschrieben. Es zeigt
- Figur 1: eine thermostatgeregelte Aufputzmischbatterie, teilweise geschnitten;
- Figur 2: den thermostatgeregelten Mischventileinsatz gemäß Figur 1 in vergrößerter Darstellung im Längsschnitt;
- Figur 3: ein anderes Ausführungsbeispiel eines thermostatgeregelten Mischventileinsatzes in vergrößerter Darstellung im Längsschnitt;
- Figur 3a: einen Teil des in Figur 3 gezeigten Mischventileinsatzes in geänderter Schnittebene;
- Figur 4: ein anderes Ausführungsbeispiel eines thermostatgeregelten Mischventileinsatzes in vergrößerter Darstellung im Längsschnitt;
- Figur 4a: eine Abwandlung des in Figur 4 dargestellten Ausführungsbeispiels;
- Figur 5: einen Teil des thermostatgeregelten Mischventileinsatzes gemäß Figur 4,4a mit einer hydraulischen Umkehreinrichtung.

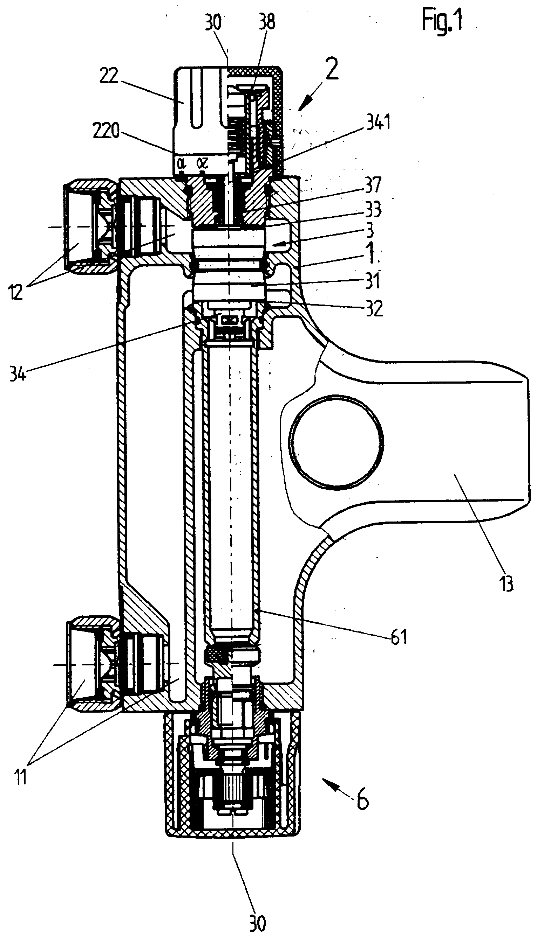

Der Einfachheit halber sind bei den Ausführungsbeispielen in der Zeichnung gleiche oder entsprechende Elemente mit jeweils gleichen Bezugszeichen versehen. Die in Figur 1 gezeigte Aufputzmischbatterie weist ein Gehäuse 1 auf, an dem ein Kaltwasseranschluß 11 und ein Warmwasseranschluß 12 sowie ein Mischwasserauslauf 13 ausgebildet ist. In dem Gehäuse 1 ist in einer auf einer Mittellinie 30 angeordneten Durchgangsbohrung auf der rechten Seite eine Temperaturvorwähleinrichtung 2 mit einem Mischventil 3 und auf der linken Seite ein Mengenregulierventil 6 mit einem rohrförmigen Ventilsitz 61 angeordnet.
Nach dem Anschluß der Mischbatterie mit den Kalt- und Warmwasseranschlüssen 11,12 an das jeweilige Versorgungsleitungsnetz (in der Zeichnung nicht dargestellt) wird das Warmwasser vom Warmwasseranschluß 12 einem Warmwasserventilsitz 33 und das Kaltwasser vom Kaltwasseranschluß 11 einem Kaltwasserventilsitz 32 im Gehäuse 1 zugeführt. Zwischen den beiden Ventilsitzen 32,33 ist ein Ventilkörper 31 vorgesehen, mit dem die Durchtrittsquerschnitte am Kalt- und Warmwasserventilsitz 32,33 mit Hilfe der Temperaturvorwähleinrichtung 2 und dem mit seinem Fühlbereich im Mischwasser angeordneten Thermostaten 34 bestimmbar sind. Das erzeugte temperierte Mischwasser gelangt durch den rohrförmigen Ventilsitz 61 zum Mengenregulierventil 6, mit dem die Ausflußmenge in bekannter Weise bestimmt werden kann, wonach dann das Mischwasser über den Mischwasserauslauf 13 an den Verbraucher abgegeben wird. Durch eine Drehbewegung an einem Griff 22 der Temperaturvorwähleinrichtung 2 kann mit Hilfe einer Skala 220 die Temperatur voreingestellt werden. Hierbei wird mit Hilfe einer Stellmutter 21 die von dem Thermostaten 34 und dem Ventilkörper 31 gebildete Einheit in die erforderliche Position zwischen den Kalt-und Warmwasserventilsitzen 32,33 gebracht. Entspricht die Temperatur des erzeugten Mischwassers nicht der voreingestellten Temperatur, so erfolgt aus dem Thermostaten 34 eine axiale Auslenkung eines Stößels 341, mit dem die Position des Ventilkörpers 31 zwischen den Kalt- und Warmwasserventilsitzen 32,33 entsprechend verändert wird, so daß die Istwerttemperatur des Mischwassers der mit der Temperaturvorwähleinrichtung 2 eingestellten Sollwerttemperatur angenähert wird.

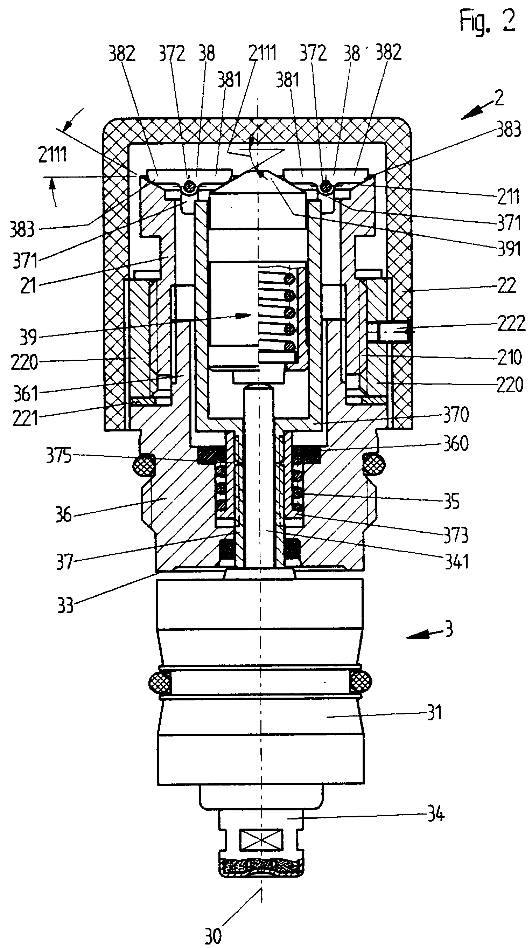

Im einzelnen kann der Aufbau und die Funktionsweise der Mischventileinheit aus der Figur 2 der Zeichnung entnommen werden. Die Mischventileinheit bzw. Mischventilkartusche wird im wesentlichen aus der Temperaturvorwähleinrichtung 2 und dem Mischventil 3 gebildet. Der Ventilkörper 31 ist mit dem Thermostaten 34 mit Hilfe eines Halte- und Führungsrohrs 37 als Einheit zusammengefügt, wobei der Stößel 341 koaxial in dem Halte- und Führungsrohr 37 angeordnet ist. Das Halte- und Führungsrohr 37 ist in einem Kopfstück 36, welches in einer Aufnahmebohrung des Gehäuses 1 einschraubbar ist, gedichtet axial beweglich gelagert. Das Halte- und Führungsrohr 37 ist dabei zweiteilig ausgebildet und weist einen vorstehenden Teil 370 auf, der mit Hilfe einer Gewindemutter 375 an den unteren Teil befestigt ist. Die Gewindemutter 375 hat dabei einen Ringbund 373, an dem eine Rückstellfeder 35 anliegt. Andererseits ist die Rückstellfeder 35 von einer Ringschraube 360 am Kopfstück 36 abgestützt, so daß das Halte- und Führungsrohr 37 mit dem Ventilkörper 31 und dem Thermostaten 34 in Richtung auf den Kaltwasserventilsitz 32 gestrammt ist. In einem erweiterten Bereich des vorstehenden Teils 370 ist eine bekannte Überlastsicherung 39 verschiebbar angeordnet, wobei die vorstehende Stirnfläche 391 keilförmig ausgebildet ist.
Am äußeren Bereich des vorstehenden Teils 370 sind Drehachsenlager 371 einstückig ausgebildet, wobei mit Hilfe von Achsen 372 wenigstens zwei Kipphebel 38 verschwenkbar gelagert sind. Die Kipphebel 38 weisen gleichlange innere und äußere Hebelarme 381,382 auf.

Die inneren und äußeren Hebelarme 381,382 sind mit gerundeten Auflageenden 383 versehen, die einerseits an der Stirnfläche 391 und andererseits an einer ebenfalls schrägen Schulter 211 der Stellmutter 21 anliegen. Die Stirnfläche 391 und die Schulter 211 haben eine Neigung 2111 von etwa 30°.

Die Stellmutter 21 ist drehfest aber axial verschiebbar auf einem rohrförmigen Ansatz 361 des Kopfstücks 36 angeordnet. An der Außenmantelfläche der Stellmutter 21 ist mittels Bewegungsgewinde 210 ein Ringstück 220 vorgesehen, welches mit einer Stirnseite unter Zwischenlage eines Gleitrings 221 an der Stirnseite des Kopfstücks 36 abgestützt ist. Auf dem größeren Umfang des Ringstücks 220 ist der topfartige Griff 22 mit einer Radialschraube 222 fest verbunden.

Das Mischventil hat folgende Funktionsweise:
Durch eine Drehbewegung am Griff 22 wird die Stellmutter 21 axial zum Kopfstück 36 verschoben. Hierbei wird die Stellbewegung durch die Kipphebel 38 unmittelbar auf das Halte- und Führungsrohr 370,37 übertragen, so daß die Position des Ventilkörpers 31 zum Warmwasserventilsitz 33 und Kaltwasserventilsitz 32 entsprechend geändert wird.
Wird nun vom Thermostaten 34 eine Abweichung von der Sollwerttemperatur erfühlt, so erfährt der Stößel 341 eine entsprechende Auslenkung und verschiebt hierbei mit der Überlastsicherung 39 die Stirnfläche 391, so daß nunmehr das Halte- und Führungsrohr 37,370 eine entsprechende Axialverschiebung erfährt, da die Schulter 211 nicht mitbewegt wird. Ist die erfühlte Istwerttemperatur des Mischwassers zu hoch, so wird der Stößel 341 aus dem Thermostaten 34 ausgetrieben, so daß die Stirnfläche 391 aus dem Ende des vorstehenden Teils 370 herausgetrieben wird. Hierbei wird also das Halte- und Führungsrohr 37 ebenfalls aus dem Kopfstück 36 herausgezogen, so daß der Durchtrittsquerschnitt am Warmwasserventilsitz 33 verringert wird, wobei der Durchtrittsquerschnitt am Kaltwasserventilsitz 32 um den gleichen Betrag vergrößert wird, so daß hierdurch die Mischwasser-Isttemperatur der Sollwerttemperatur angenähert wird.

Wird vom Thermostaten 34 eine zu kalte Mischwassertemperatur festgestellt, so erfolgt der Wirkungsablauf in umgekehrter Richtung, d.h. der Stößel 341 wird in den Thermostaten 34 zurückgeführt, wodurch auch die Stirnfläche 391 entsprechend absinkt, so daß nunmehr die Rückstellfeder 35 das Halte- und Führungsrohr 37,370 mit dem Ventilkörper 31 in Richtung auf den Kaltwasserventilsitz 32 bewegt. Bei dieser Bewegungsrichtung wird nunmehr der Durchtrittsquerschnitt am Warmwasserventilsitz 33 vergrößert und der Durchtrittsquerschnitt am Kaltwasserventilsitz 32 verringert.
Sollte bei ungünstigen Verhältnissen der Ventilkörper 31 bereits auf dem Warmwasserventilsitz 33 aufsitzen und der Thermostat 34 trotzdem den Stößel 341 weiter austreiben, so wird in dieser Stellung die gegenüber der Rückstellfeder 35 stärker vorgespannte Feder der Überlastsicherung 39 zusammengedrückt, so daß auch derartige Betriebsstellungen vom Thermostaten 34 schadlos bewältigt werden können.

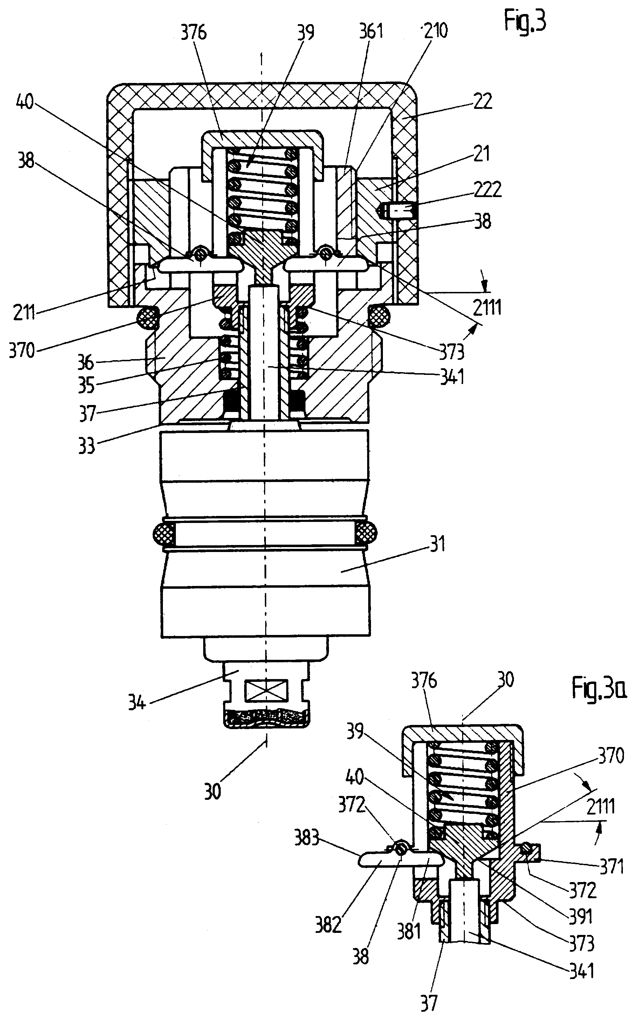

In den Figuren 3 und 3a ist eine abgewandelte Ausführungsform des in Figur 2 gezeigten Mischventils dargestellt, wobei diese Ausführung besonders platzsparend baut und auch eine relativ einfache Umwandlung der Baueinheit in die entgegengesetzte Wirkrichtung möglich ist.
Die Kipphebel 38 sind hierbei um 180^{o} gedreht angeordnet und wirken mit dem inneren Hebelarm 381 an einem oberhalb der Kipphebel 38 angeordneten Druckstück 40 an der schrägen Stirnfläche 391 und mit dem äußeren Hebelarm 382 an einer schrägen Stirnfläche 211 der Stellmutter 21. Die Stellmutter 21 ist dabei auf einem rohrförmigen Ansatz 361 mittels Bewegungsgewinde 210 angeordnet. Auf der Stellmutter 21 ist mit einer Radialschraube 222 das Griffstück 22 befestigt. Oberhalb des Druckstücks 40 ist in dem vorstehenden Teil 370 eine als Druck- und Überlasteinheit 39 wirkende Feder angeordnet, die mit Hilfe einer Schraubkappe 376 eine höhere Vorspannung aufweist als die Rückstellfeder 35. Das Drehachsenlager 371 ist auf einem Ringflansch des vorstehenden Teils 370 ausgebildet, wobei in einer umlaufenden Ringnut eine ringförmige Achse 372 angeordnet ist und die Kipphebel 38 zusammen mit der Schulter 211 und der Rückstellfeder 35 in ihren Drehachsenlagern 371 hält. Das Druckstück 40 wird dabei in seiner Position im vorstehenden Teil 370 von dem Stößel 341 des Thermostaten 34 gehalten. Die Feder der Druck- und Überlasteinheit 39 wirkt somit über das Druckstück 40 unmittelbar auf den Stößel 341 ein, so daß die Kraft der Druck- und Überlasteinheit 39 nicht die Kipphebel 38 belastet.
Bei einer Auslenkung des Stößels 341 in Richtung auf den Griff 22 wird somit die Feder der Druck- und Überlasteinheit 39 von dem Druckstück 40 zusammengedrückt, so daß nunmehr entsprechend der Auslenkung des Stößels 341 auch das Halte- und Führungsrohr 37,370 eine entsprechende Bewegung über die Schulter 211 durch die Rückstellfeder 35 vornimmt und somit den Durchtrittsquerschnitt am Warmwasserventilsitz 33 verringert und entsprechend den Durchtrittsquerschnitt am Kaltwasserventilsitz 32 vergrößert. Bei einer umgekehrten Auslenkung des Stößels 341 erfolgt jeweils eine umgekehrte Bewegung des Halte-und Führungsrohrs 37,370.
Die Sollwerteinstellung erfolgt hierbei ebenfalls durch eine Drehbewegung des Griffs 22, der dabei axial zum Ansatz 361 des Kopfstücks 36 verschoben wird, so daß entsprechend im Zusammenwirken mit der Rückstellfeder 35 das Halte- und Führungsrohr 37,370 zusammen mit dem Ventilkörper 31 in die entsprechende Sollwertposition in dem Gehäuse 1 der Mischbatterie bewegt werden kann.

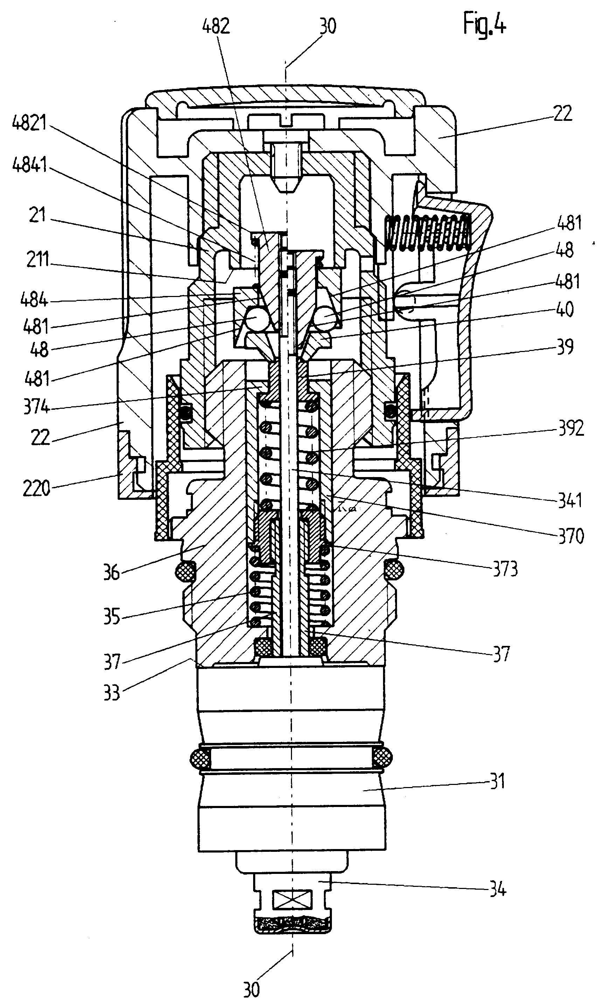

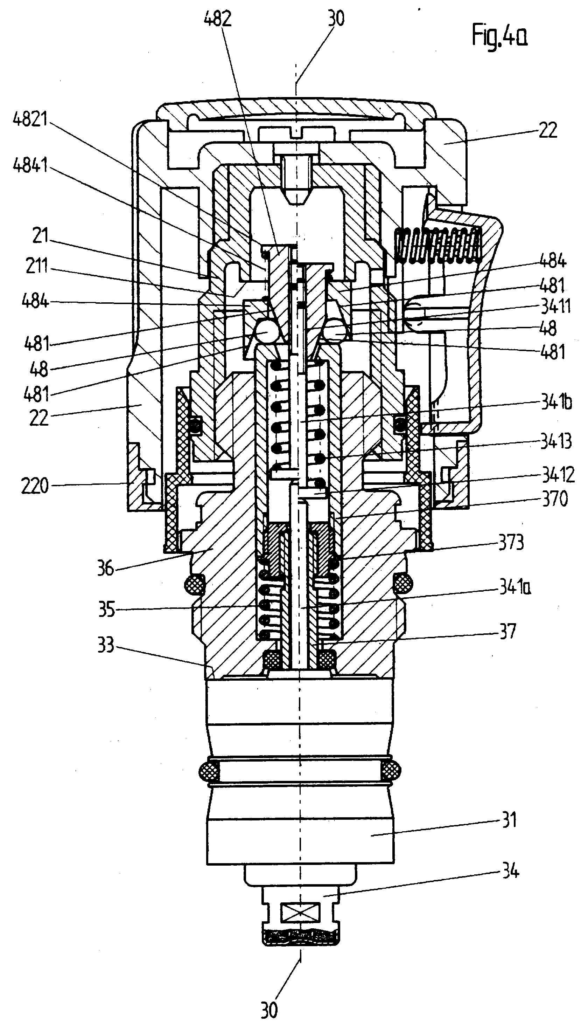

In Figur 4 ist ein anderes Ausführungsbeispiel gezeigt, wobei die Umkehrvorrichtung mit Hilfe von Kugeln 48 erfolgt, die mit einem inneren Formteil 482 und einem äußeren Formteil 484 zusammenwirken, wobei die Kugeln 48 an kegelförmigen Anlageflächen 481 der Formteile 482, 484 anliegen. Außerdem wirkt das Halte- und Führungsrohr 37,370 mit einer Stirnfläche eines Druckstücks 40 in den von den kegelförmigen Anlageflächen 481 erweiterten Bereich ein und stützt sich hierbei an den Kugeln 48 ab. Das Druckstück 40 wird dabei an der gegenüberliegenden Stirnseite von einer als Buchse ausgebildeten, in dem Halte- und Führungsrohr 37,370 verschiebbar und von einer eine höhere Vorspannung als die Rückstellfeder 35 aufweisenden Feder 392 gegen einen Ringbund 374 gestrammten Überlastsicherung 39 abgestützt und gehaltert. Die kegelförmigen Anlageflächen 481 weisen einen Kegelwinkel von etwa 40° auf. Das innere Formteil 482 ist mit einem Teilbereich aus dem äußeren Formteil 484 herausgeführt und weist am äußeren Endbereich einen Ringbund 4821 auf, wobei zwischen dem Ringbund 4821 und der Stirnfläche des äußeren Formteils 484 eine Feder 4841 angeordnet ist. Das innere Formteil 482 ist hierbei mit einem Gewinde 3411 an dem Stößel 341 befestigt. Der Stößel 341 ist andererseits zug- und drehfest mit dem Dehnkörper des Thermostaten 34 verbunden.

Das Mischventil hat folgende Funktionsweise:
In der rechten Hälfte der Figur 4 befindet sich der Ventilkörper 31 in Schließposition an dem Warmwasserventilsitz 33. Wird nun von dem Thermostaten 34 im Mischwasserbereich eine Istwerttemperatur ermittelt, die unter der Sollwerttemperatur liegt, so wird der Stößel 341 in Richtung auf den Thermostaten 34 zurückgezogen, wobei das innere Formteil 482 in Richtung auf den Thermostaten bewegt wird. Hierbei werden die Kugeln 48 radial nach außen bewegt, so daß nunmehr der äußere Formteil 484 axial gegen den Griff 22 bewegt wird und somit das Halte- und Führungsrohr 37,370 axial in Richtung auf den Thermostaten 34 verschoben wird, so daß nunmehr ein Durchtrittsquerschnitt an dem Warmwasserventilsitz 33 freigegeben wird, während gleichzeitig der Durchtrittsquerschnitt am Kaltwasserventilsitz 32 um den entsprechenden Betrag verringert wird. Bei einer umgekehrten Bewegung der Stößelstange 341 folgt die Bewegung der Halte- und Führungsstange 37,370 in umgekehrter Richtung.
Wird bei einem Anliegen des Ventilkörpers 31 an dem Warmwasserventilsitz 33 der Stößel 341 weiter in Richtung auf den Griff 22 ausgetrieben, so erfolgt hierbei eine Absenkung des äußeren Formteils 484 von der Schulter 211 der Stellmutter 21, wie es auf der linken Bildhälfte der Figur 4 zu sehen ist. Die Feder 4841 drückt hierbei das äußere Formteil 484 in Richtung auf das vorstehende Teil 370 mit dem Druckstück 40, so daß ein Herausfallen der Kugeln 48 ausgeschlossen ist. Gelangt dagegen der Ventilkörper 31 beim Regelungsvorgang gegen den Kaltwasserventilsitz 32, so wird bei einer weiteren Auslenkung in die gleiche Richtung die Überlastsicherung 39 von dem Druckstück 40 in den vorstehenden Bereich 370 des Halte- und Führungsrohrs 37, entgegen der Kraft der Feder 392, eingeschoben, so daß Beschädigungen vermieden werden.

Bei dem in Figur 4 gezeigten Ausführungsbeispiel wird der Stößel 341 auf Zug und Druck belastet, was bei Thermostaten problematisch ist, die mit einem Dehnstoffelement arbeiten, wie es z.B. aus der EP 0 153 555 B1 bekannt ist. In Figur 4a ist daher eine abgewandelte Ausführung dargestellt, bei der ein innerer Stößel 341a mit dem Thermostaten 34 zusammenwirkt, der nur auf Druck beansprucht ist. An dem inneren Stößel 341a ist koaxial ein äußerer Stößel 341b angelagert, der mit dem Gewinde 3411 an dem inneren Formteil 482 befestigt ist. Der äußere Stößel 341b weist an dem Endbereich, der in dem Halte- und Führungsrohr 37,370 angeordnet ist, einen Flansch 3412 auf. Der Flansch 3412 dient einerseits als Anlagefläche für den inneren Stößel 341a und andererseits als Widerlager für eine Druckfeder 3413. Die Druckfeder 3413 hat eine höhere Vorspannung als die Rückstellfeder 35 und stützt sich auf der anderen Seite an der eingezogenen Stirnseite des vorstehenden Teils 370 ab, die an der gegenüberliegenden Seite als Druckstück für die Kugeln 48 wirkt. Sie drückt somit den äußeren Stößel 341b in Richtung auf den inneren Stößel 341a. Bei dieser Ausbildung ist eine besondere Überlastsicherung nicht erforderlich, da der innere Stößel 341a beim Anliegen des Ventilkörpers 31 am Kaltwasserventilsitz 32 oder Warmwasserventilsitz 33 in gleicher Richtung weiter ausgelenkt werden kann. Beim Anliegen des Ventilkörpers 31 an dem Warmwasserventilsitz 33 wird das äußere Formteil 484 von der Schulter 211 abgesenkt, wie es in der linken Hälfte der Figur 4a dargestellt ist. Gelangt der Ventilkörper 31 an dem Kaltwasserventilsitz 32 zur Anlage, so kann der Dehnstoff im Thermostaten 34 ohne Auswirkung auf die Umkehrvorrichtung weiter schrumpfen, da die Stellkraft allein von der Druckfeder 3413 bewirkt wird.
Im übrigen entspricht der Mischventileinsatz dem in Figur 4 dargestellten.

Anstatt der Kugeln 48 können bei den Ausführungsbeispielen in Figur 4 und 4a auch anders ausgebildete Rollkörper, wie z.B. Walzen, vorgesehen werden. Hierbei sind dann keilförmig ebene Flächen an den inneren und äußeren Formteilen vorzusehen. Durch die Anordnung von Walzen und dem Zusammenwirken mit den ebenen Keilflächen kann die Flächenpressung an dem inneren und äußeren Formteil verringert werden.

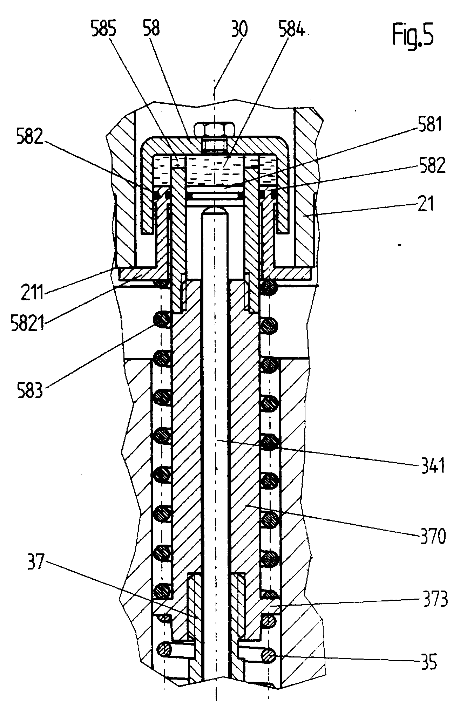

In Figur 5 ist ein abgewandeltes Ausführungsbeispiel der Figur 4,4a in schematischer Weise dargestellt, wobei die Umkehrvorrichtung hydraulisch arbeitet. In der Stellmutter 21 ist hierbei ein topfartiger Körper 58 vorgesehen, in dem Hydraulikflüssigkeit 584 angeordnet ist. In einer koaxial zur Mittelachse 30 vorgesehenen Bohrung ist ein zentraler Kolben 581 gedichtet angeordnet, wobei koaxial in dem Körper 58 ein Ringraum ausgebildet ist, in dem ein Ringkolben 582 verschiebbar angeordnet ist. Der Ringraum ist über Überströmöffnungen 585 mit der Bohrung für den Kolben 581 im Bodenbereich verbunden, so daß die Hydraulikflüssigkeit frei zwischen dem Ringbereich und der Bohrung hin- und herströmen kann. Der topfartige Körper 58 ist dabei mittels Gewinde an dem vorstehenden Teil 370 des Halte- und Führungsrohrs 37 befestigt, wobei der koaxial angeordnete Stößel 341 an dem Kolben 581 an der äußeren Stirnseite anliegt. Der Ringkolben 582 ist aus dem Körper 58 herausgeführt und mit einem Ringflansch 5821 versehen, der über den Durchmesser des Körpers 58 hinausgreift und an der Schulter 211 der Stellmutter 21 anliegt. Der Raum in dem topfartigen Körper 58 oberhalb des zentralen Kolbens 581 und des Ringkolbens 582 ist vollständig mit Hydraulikflüssigkeit ausgefüllt. Außerdem ist koaxial zum vorstehenden Teil 370 eine Feder 583 vorgesehen, die sich einerseits an dem Ringbund 373 und andererseits an dem Ringflansch 5821 abstützt, wobei die Feder 583 eine erheblich höhere Vorspannung aufweist als die koaxial unterhalb des Ringbunds 373 angreifende Rückstellfeder 35.

Diese Umkehrvorrichtung hat folgende Wirkungsweise:
Wird der Stößel 341 von dem Thermostaten in Richtung auf die Stellmutter 21 axial ausgetrieben, so wird der Kolben 581 in gleichem Maße in den Körper 58 eingeschoben, wobei gleichzeitig der durch die Hydraulikflüssigkeit gekoppelte Ringkolben 582 um den gleichen Betrag aus dem Körper 58 herausgedrückt wird. Hierbei wird die Feder 583 um den gleichen Betrag zusammengedrückt, so daß hierauf von der Rückstellfeder 35 das Halte- und Führungsrohr 370,37 mit dem Ventilkörper 31 und dem Thermostaten 34 um den gleichen Betrag in Richtung auf die Stellmutter 21 bewegt wird. Erfolgt dagegen eine Schrumpfung bzw. Rückführung des Stößels 341 aus der Stellmutter 21, so drückt die Feder 583 den Ringkolben 582 um den gleichen Betrag in den Körper 58 hinein, so daß nunmehr das an dem Körper 58 befestigte Halte- und Führungsrohr 370,37 mit dem Ventilkörper 31 in entgegengesetzter Richtung aus der Stellmutter 21 in Richtung auf den Kaltwasserventilsitz 32 bewegt wird, wobei dann die Rückstellfeder 35 entsprechend zusammengedrückt wird. Die Feder 583 muß daher eine höhere Vorspannung als die Rückstellfeder 35 aufweisen. Die Wirkfläche des Kolbens 581 entspricht dabei der Wirkfläche des Ringkolbens 582, so daß eine Übersetzung im Verhältnis 1:1 erfolgen kann.
Auch eine hydraulische Verbindungsleitung kann zwischen dem Thermostaten 34 und dem Körper 58 ausgebildet sein, so daß dann der zentrale Kolben 581 im Körper 58 entfallen kann, weil die Stellgröße in diesem Teil direkt vom Thermostaten eingespeist wird.

Bei den Ausführungsbeispielen ist das Übersetzungsverhältnis der Umkehrvorrichtung mit etwa 1:1 vorgesehen. Selbstverständlich können aber andere Übersetzungsverhältnisse gewählt werden. Dieses kann bei den Kipphebeln 38 mit unterschiedlich langen Hebelarmen erreicht werden. Bei der Umkehrvorrichtung mit Rollenkörpern kann dieses durch unterschiedliche Keil- oder Kegelwinkel des inneren und äußeren Formteils erreicht werden. Bei der hydraulisch wirkenden Umkehrvorrichtung sind lediglich die Wirkflächen der beiden Kolben entsprechend unterschiedlich zu bemessen.

## Patentansprüche

1. Thermostatgeregelte Mischbatterie, insbesondere zum Bereiten von temperiertem Warmwasser für Duschen, Badewannen, Waschbecken o.dgl., mit einem wenigstens je eine Zulauföffnung (11,12) für das kalte und warme Medium sowie eine Ablauföffnung (13) für das gemischte Medium aufweisenden Gehäuse (1), in welchem ein von einer Temperaturvorwähleinrichtung (2) stellbarer Thermostat (34) vorgesehen ist, der mit einem zwischen zwei Ventilsitzen (32,33) für das kalte und warme Medium verschiebbaren Ventilkörper (31) gekoppelt ist, und der Thermostat mit dem Ventilkörper von einer Rückstellfeder (35) in Richtung auf die an einem Kopfstück (36) des Gehäuses mit einer Stellmutter (21) angeordneten Temperaturvorwähleinrichtung gestrammt ist, wobei sich der Thermostat mit einem Stößel (341), der entsprechend der Umgebungstemperatur des Thermostatfühlbereichs eine axiale Auslenkung erfährt, im Bereich der Stellmutter axial abstützt, dadurch gekennzeichnet, daß zwischen der Stellmutter (21) und dem Stößel (341) außerhalb des vom Medium beaufschlagten Raums eine Umkehrvorrichtung für die axiale Auslenkbewegung des Stößels (341) vorgesehen ist, so daß die axiale Auslenkbewegung in umgekehrter Richtung an der Stellmutter (21) zur Wirkung gelangt.

2. Thermostatgeregelte Mischbatterie nach Anspruch 1, dadurch gekennzeichnet, daß die Umkehrvorrichtung an einem Halte- und Führungsrohr (37), welches durch das Kopfstück (36) gelagert hindurchgeführt und mit dem Ventilkörper (31) verbunden ist, befestigt oder abgestützt ist, wobei koaxial in dem Führungs- und Halterohr (37) der Stößel (341) angeordnet ist.

3. Thermostatgeregelte Mischbatterie nach Anspruch 2, dadurch gekennzeichnet, daß die Umkehrvorrichtung von Kipphebeln (38) gebildet ist, die mit einem Drehachsenlager (371) an dem Halte- und Führungsrohr (37) angeordnet sind, wobei jeweils ein innerer Hebelarm (381) des Kipphebels (38) an einer mit dem Stößel (341) des Thermostaten (34) gekoppelten Stirnfläche (391) und jeweils ein äußerer Hebelarm (382) des Kipphebels (38) an einer Schulter (211) der Stellmutter (21) anliegt.

4. Thermostatgeregelte Mischbatterie nach Anspruch 3, dadurch gekennzeichnet, daß die Stirnfläche (391) und die Schulter (211) zum Drehlager (371) eine Neigung (2111) von etwa 30^{o} aufweisen und die Kipphebel (38) an den Auflageenden (383) gerundet ausgebildet sind.

5. Thermostatgeregelte Mischbatterie nach einem der Ansprüche 3 oder 4, dadurch gekennzeichnet, daß die Kipphebel (38) auf eine ringförmige Achse (372) gelagert sind.

6. Thermostatgeregelte Mischbatterie nach einem der Ansprüche 2 bis 5, dadurch gekennzeichnet, daß das Halte- und Führungsrohr (37) zweiteilig ausgebildet und im Bereich der Verbindung einen Ringbund (373) zur Abstützung der Rückstellfeder (35) vorgesehen ist.

7. Thermostatgeregelte Mischbatterie nach einem der Ansprüche 2 bis 6, dadurch gekennzeichnet, daß im vorstehenden Teil (370) des Halte- und Führungsrohrs (37) eine Druck- und Überlasteinheit (39) angeordnet ist.

8. Thermostatgeregelte Mischbatterie nach einem der Ansprüche 2 bis 7, dadurch gekennzeichnet, daß die Umkehrvorrichtung Rollkörper (48) enthält, die zwischen zwei konzentrisch zueinander angeordneten und axial gegeneinander verschiebbaren Formteilen (482,484) vorgesehen sind, wobei die Rollkörper an gegeneinander zur Mittelachse (30) geneigt ausgebildeten Anlageflächen der Formteile (482,484) und an der Stirnseite des Halte- und Führungsrohrs (370,37), welches in den erweiterten Bereich der Anlageflächen eingreift, anliegen, und daß der Stößel (341) des Thermostaten (34) mit dem inneren Formteil (482) verbunden ist, während das äußere Formteil (484) an der Stellmutter (21) anliegt.

9. Thermostatgeregelte Mischbatterie nach Anspruch 8, dadurch gekennzeichnet, daß das Halte- und Führungsrohr (370,37) über eine Druck- und Überlastsicherung (39) mit einem Druckstück (40) in den erweiterten Bereich der Anlageflächen eingreift und der Stößel (341) mit dem Dehnkörper des Thermostaten (34) druck- und zugfest verbunden ist.

10. Thermostatgeregelte Mischbatterie nach Anspruch 8, dadurch gekennzeichnet, daß ein Stößel (341a,341b) vorgesehen ist, der lose im Halte- und Führungsrohr (37) geführt und von einer Druckfeder (3413) in Richtung auf den Thermostaten (34) gedrückt ist, wobei die Druckfeder (3413) eine höhere Vorspannung aufweist als die Rückstellfeder (35).

11. Thermostatgeregelte Mischbatterie nach Anspruch 10, dadurch gekennzeichnet, daß ein äußerer Stößel (341b) in dem vorstehenden Teil (370) des Halte- und Führungsrohrs (37) koaxial zu einem inneren Stößel (341a) angeordnet ist, wobei der äußere Stößel (341b) mit einem stirnseitigen Flansch (3412) am inneren Stößel (341a) anliegt und zwischen dem Flansch (3412) und einem eingezogenen, als Druckstück für die Kugeln (48) wirkenden Stirnbereich des vorstehenden Teils (370) die Druckfeder (3413) angeordnet ist.

12. Thermostatgeregelte Mischbatterie nach einem der Ansprüche 8 bis 11, dadurch gekennzeichnet, daß die Rollkörper als Kugeln (48) ausgebildet sind und die Formteile (482,484) kegelförmige Anlageflächen (481) für die Kugeln (48) aufweisen.

13. Thermostatgeregelte Mischbatterie nach Anspruch 12, dadurch gekennzeichnet, daß die kegelförmige Anlagefläche (481) des inneren Formteils (482) mit der Kegelspitze auf den Thermostaten (34) gerichtet ist und die beiden gegenläufig angeordneten kegelförmigen Anlageflächen (481) jeweils einen Kegelwinkel von etwa 30 bis 90°, vorzugsweise 40°, aufweisen.

14. Thermostatgeregelte Mischbatterie nach Anspruch 12 oder 13, dadurch gekennzeichnet, daß das innere Formteil (482) einen aus dem äußeren Formteil (484) vorstehenden Ringbund (4821) aufweist, so daß zwischen dem Ringbund (4821) und der Stirnfläche des äußeren Formteils (484) eine Feder (4841) anordbar ist, die das äußere Formteil (484) in Richtung auf den Thermostaten (34) drückt.

15. Thermostatgeregelte Mischbatterie nach einem der Ansprüche 12 bis 14, dadurch gekennzeichnet, daß an dem inneren Formteil (482) koaxial der Stößel (341, 341b) mit Gewinde (3411) befestigbar ist.

16. Thermostatgeregelte Mischbatterie nach wenigstens einem der Ansprüche 1 bis 15, dadurch gekennzeichnet, daß die Umkehrvorrichtung hydraulisch betrieben ist.

17. Thermostatgeregelte Mischbatterie nach Anspruch 16, dadurch gekennzeichnet, daß ein topfartiger Körper (58) an dem Halte- und Führungsrohr (37,370) befestigt ist und der Stößel (341) auf einen ersten zentralen Kolben (581) im Körper (58) einwirkt, während koaxial ein im Durchmesser größerer Ringkolben (582) in dem Körper (58) angeordnet ist, wobei die Flüssigkeitsräume hinter dem zentralen Kolben (581) und dem Ringkolben (582) im Körper (58) miteinander verbunden sind, und daß der Ringkolben (582) axial aus dem Körper (58) herausgeführt ist und einen Ringflansch (5821) aufweist, der über den Durchmesser des Körpers (58) hinausgreift und an einer Schulter (211) der Stellmutter (21) anliegt, wobei koaxial zum Halte- und Führungsrohr (37,370) eine Feder (583) angeordnet ist, die sich einerseits an einem Bund (373) des Halte- und Führungsrohrs (37,370) und andererseits am Ringflansch (5821) abstützt, derart, daß der Ringkolben (582) in den Körper (58) hineingedrückt ist und die Vorspannung der Feder (583) höher ist als bei der Rückstellfeder (35).

18. Thermostatgeregelte Mischbatterie nach Anspruch 16 oder 17, dadurch gekennzeichnet, daß anstatt des mechanischen Stößels (341) eine hydraulische Verbindung zwischen den Thermostaten und der Umkehrvorrichtung besteht.

## Claims

1. Thermostat-regulated mixer tap unit, especially for the preparation of temperature-adjusted hot water for showers, bath tubs, wash basins or the like, which mixer tap unit has a housing (1) having at least one inlet (11, 12) each for the cold and the hot medium and an outlet (13) for the mixed medium, in which housing (1) there is provided a thermostat (34) that may be adjusted by a temperature preselection device (2), which thermostat (34) is coupled to a valve body (31) that is movable between two valve seats (32, 33) for the cold and the hot medium, and the thermostat together with the valve body is biassed by a restoring spring (35) in the direction towards the temperature preselection device which is mounted by means of an adjusting nut (21) on a head piece (36) of the housing, the thermostat being axially held in the region of the adjusting nut by means of a push rod (341) that undergoes an axial displacement according to the ambient temperature of the thermostat sensing region, characterised in that there is provided between the adjusting nut (21) and the push rod (341), outside the space to which the medium is admitted, a reversal mechanism for the axial displacement movement of the push rod (341) so that the axial displacement movement acts on the adjusting nut (21) in the reverse direction.

2. Thermostat-regulated mixer tap unit according to claim 1, characterised in that the reversal mechanism is fastened to or supported on a holding and guiding tube (37) that is passed through and mounted in the head piece (36) and is connected to the valve body (31), the push rod (341) being coaxially arranged in the guiding and holding tube (37).

3. Thermostat-regulated mixer tap unit according to claim 2, characterised in that the reversal mechanism is formed by rocking levers (38) that are arranged on the holding and guiding tube (37) by means of a pivot bearing (371), an inner lever arm (381) of each rocking lever (38) bearing against an end surface (391) coupled with the push rod (341) of the thermostat (34) and an outer lever arm (382) of each rocking lever (38) bearing against a shoulder (211) of the adjusting nut (21).

4. Thermostat-regulated mixer tap unit according to claim 3, characterised in that the end surface (391) and the shoulder (211) are inclined at an angle (2111) of approximately 30° to the pivot bearing (371) and the rocking levers (38) are rounded at the bearing ends (383).

5. Thermostat-regulated mixer tap unit according to either of claims 3 and 4, characterised in that the rocking levers (38) are pivotally mounted on a ringshaped axis (372).

6. Thermostat-regulated mixer tap unit according to any one of claims 2 to 5, characterised in that the holding and guiding tube (37) is of two part construction and an annular collar (373) for supporting the restoring spring (35) is provided in the region of the connection.

7. Thermostat-regulated mixer tap unit according to any one of claims 2 to 6, characterised in that a compression and overload unit (39) is arranged in the projecting part (370) of the holding and guiding tube (37).

8. Thermostat-regulated mixer tap unit according to any one of claims 2 to 7, characterised in that the reversal mechanism comprises rolling bodies (48) that are provided between two shaped parts (482, 484) arranged concentrically with each other and displaceable axially against each other, the rolling bodies resting against bearing surfaces of the shaped parts (482, 484), which bearing surfaces are inclined towards each other with respect to the centre axis (30), and against the end face of the holding and guiding tube (370, 37) which extends into the widened region of the bearing surfaces, and the push rod (341) of the thermostat (34) is connected to the inner shaped part (482) while the outer shaped part (484) rests against the adjusting nut (21).

9. Thermostat-regulated mixer tap unit according to claim 8, characterised in that the holding and guiding tube (370, 37) extends via a compression and overload protection device (39) with a thrust piece (40) into the widened region of the bearing surfaces and the push rod (341) is connected to the expanding body of the thermostat (34) in a manner that is resistant to tension and compression.

10. Thermostat-regulated mixer tap unit according to claim 8, characterised in that there is provided a push rod (341a, 341b) that is movably guided in the holding and guiding tube (37) and is urged by a compression spring (3413) in the direction towards the thermostat (34), the compression spring (3413) having a higher preloading than the restoring spring (35).

11. Thermostat-regulated mixer tap unit according to claim 10, characterised in that an outer push rod (341b) is arranged in the projecting part (370) of the holding and guiding tube (37) coaxially with an inner push rod (341a), the outer push rod (341b) bearing by an end-face flange (3412) on the inner push rod (341a) and the compression spring (3413) being arranged between the flange (3412) and a turned-in end region of the projecting part (370), which end region acts as a thrust piece for the balls (48).

12. Thermostat-regulated mixer tap unit according to any one of claims 8 to 11, characterised in that the rolling bodies are in the form of balls (48) and the shaped parts (482, 484) have conical bearing surfaces (481) for the balls (48).

13. Thermostat-regulated mixer tap unit according to claim 12, characterised in that the conical bearing surface (481) of the inner shaped part (482) is oriented with the cone vertex towards the thermostat (34), and the two conical bearing surfaces (481) arranged to run in the opposite direction each have a cone angle of approximately from 30 to 90°, preferably 40°.

14. Thermostat-regulated mixer tap unit according to claim 12 or 13, characterised in that the inner shaped part (482) has an annular collar (4821) projecting out of the outer shaped part (484) so that there may be arranged between the annular collar (4821) and the end surface of the outer shaped part (484) a spring (4841) that urges the outer shaped part (484) in the direction towards the thermostat (34).

15. Thermostat-regulated mixer tap unit according to any one of claims 12 to 14, characterised in that the push rod (341, 341b) can be fastened to the inner shaped part (482) coaxially by means of a screw thread (3411).

16. Thermostat-regulated mixer tap unit according to at least one of claims 1 to 15, characterised in that the reversal mechanism is operated hydraulically.

17. Thermostat-regulated mixer tap unit according to claim 16, characterised in that a cup-like body (58) is fastened to the holding and guiding tube (37, 370) and the push rod (341) acts on a first, central piston (581) in the body (58), while an annular piston (582) having a larger diameter is arranged coaxially in the body (58), the fluid chambers behind the central piston (581) and the annular piston (582) being connected to each other in the body (58), and the annular piston (582) is led axially out of the body (58) and has an annular flange (5821) that extends outward beyond the diameter of the body (58) and bears against a shoulder (211) of the adjusting nut (21), there being arranged coaxially with the holding and guiding tube (37, 370) a spring (583) that is supported at one end on a collar (373) of the holding and guiding tube (37, 370) and at the other end on the annular flange (5821) in such a manner that the annular piston (582) is pressed into the body (58) and the preloading of the spring (583) is higher than in the restoring spring (35).

18. Thermostat-regulated mixer tap unit according to claim 16 or 17, characterised in that instead of the mechanical push rod (341) there is a hydraulic connection between the thermostat and the reversal mechanism.

## Revendications

1. Mitigeur à régulation thermostatique notamment pour préparer de l'eau chaude sanitaire à la bonne température pour la douche, le bain, le lavabo ou analogue, comportant un boîtier (1) avec au moins un orifice d'alimentation (11, 12) respectif pour le fluide froid et le fluide chaud ainsi qu'un orifice de sortie (13) pour le fluide mitigé, et un thermostat (34), réglable par un sélecteur de température (2), couplé à un corps de soupape (31) coulissant entre deux sièges de soupape (32, 33) pour le fluide froid et le fluide chaud, le thermostat et le corps de soupape étant appliqués par un ressort de rappel (35) en direction du sélecteur de température prévu avec un écrou de réglage (21) sur la tête (36) du boîtier, le thermostat s'appuyant axialement au niveau de l'écrou de réglage par un poussoir (341) effectuant un débattement axial en fonction de la température ambiante de la zone de détection du thermostat, caractérisé en ce qu'entre l'écrou de réglage (21) et le poussoir (341), à l'extérieur du volume sollicité par le fluide, il est prévu un dispositif inverseur pour le mouvement de débattement axial du poussoir (341), de façon à faire agir le mouvement de débattement axial dans la direction opposée sur l'écrou de réglage (21).

2. Mitigeur à régulation thermostatique selon la revendication 1, caractérisé en ce que le dispositif inverseur est fixé ou appuyé contre un tube de guidage et de maintien (37) monté à travers la tête (36) et relié au corps de soupape (31), le poussoir (341) étant prévu coaxialement dans le tube de guidage et de maintien (37).

3. Mitigeur à régulation thermostatique selon la revendication 2, caractérisé en ce que le dispositif inverseur est constitué par des leviers basculants (38) montés sur le tube de guidage et de maintien (37) par l'intermédiaire d'un palier à axe de pivotement (371), et chaque bras de levier intérieur (381) du levier basculant (38) coopère avec une surface frontale (391) couplée au poussoir (341) du thermostat (34), et chaque bras de levier extérieur (382) du levier basculant (38) s'appuie contre un épaulement (211) de l'écrou de réglage (21).

4. Mitigeur à régulation thermostatique selon la revendication 3, caractérisé en ce que la surface frontale (391) et l'épaulement (211) présentent, par rapport au palier de pivotement (371), une inclinaison (2111) d'environ 30° et les leviers basculants (38) ont des extrémités d'appui (383) arrondies.

5. Mitigeur à régulation thermostatique selon l'une des revendications 3 ou 4, caractérisé en ce que les leviers basculants (38) sont montés sur un axe annulaire (372).

6. Mitigeur à régulation thermostatique selon l'une des revendications 2 à 5, caractérisé en ce que le tube de guidage et de maintien (37) est en deux parties et comporte, au niveau de la liaison, une collerette annulaire (373) pour appuyer le ressort de rappel (35).

7. Mitigeur à régulation thermostatique selon l'une des revendications 2 à 6, caractérisé par une unité de pression et de surcharge (39) prévue dans la partie en saillie (370) du tube de guidage et de maintien (37).

8. Mitigeur à régulation thermostatique selon l'une des revendications 2 à 7, caractérisé en ce que le dispositif inverseur comporte des organes de roulement (48) prévus entre deux pièces moulées (482, 484) concentriques et pouvant coulisser axialement l'une par rapport à l'autre, les organes de roulement s'appuyant contre des surfaces d'appui des pièces moulées (482, 484), inclinées l'une vers l'autre par rapport à l'axe (30) et contre la face frontale du tube de guidage et de maintien (370, 37) qui vient prendre dans la zone élargie des surfaces d'appui, et en ce que le poussoir (341) du thermostat (34) est relié à la pièce moulée (482) intérieure alors que l'autre pièce moulée (484) s'appuie contre l'écrou de réglage (21).

9. Mitigeur à régulation thermostatique selon la revendication 8, caractérisé en ce que le tube de guidage et de maintien (370, 37) agit dans la zone élargie des surfaces d'appui par une sécurité de pression et de surcharge (39), par un élément d'appui (40), et le poussoir (341) est relié solidairement en pression et en traction à l'élément de dilatation du thermostat (34).

10. Mitigeur à régulation thermostatique selon la revendication 8, caractérisé par un poussoir (341a, 341b) guidé librement dans le tube de guidage et de maintien (37) et poussé en direction du thermostat (34) par un ressort de compression (3413), ce ressort de compression (3413) ayant une précontrainte plus importante que le ressort de rappel (35).

11. Mitigeur à régulation thermostatique selon la revendication 10, caractérisé par un poussoir extérieur (341b) prévu dans la partie en saillie extérieure (370) du tube de guidage et de maintien (37), coaxialement à un poussoir intérieur (341a), le poussoir extérieur (341b) s'appuyant par une bride frontale (3412) contre le poussoir intérieur (341a), et le ressort de compression (3413) est prévu entre la bride (3412) et une zone frontale, rentrée, fonctionnant comme élément d'appui pour les billes (48) et appartenant à la partie en saillie (370).

12. Mitigeur à régulation thermostatique selon l'une des revendications 8 à 11, caractérisé en ce que les organes de roulement sont des billes (48) et les pièces moulées (482, 484) présentent des surfaces d'appui coniques (481) pour les billes (48).

13. Mitigeur à régulation thermostatique selon la revendication 12, caractérisé en ce que la surface d'appui conique (481) de la pièce moulée intérieure (482) est dirigée par le sommet du cône sur le thermostat (34), et les deux surfaces d'appui (481), coniques, opposées, ont un angle au sommet compris entre environ 30° et 90°, et de préférence égal à 40°.

14. Mitigeur à régulation thermostatique selon la revendication 12 ou 13, caractérisé en ce que la pièce moulée intérieure (482) comporte une collerette annulaire (4821) en saillie par rapport à la pièce moulée extérieure (484), de sorte qu'un ressort (4841) puisse se monter entre la collerette annulaire (4821) et la surface frontale de l'autre pièce moulée (484), ressort qui pousse la pièce de forme extérieure (484) en direction du thermostat (34).

15. Mitigeur à régulation thermostatique selon l'une des revendications 12 à 14, caractérisé en ce que le poussoir (341, 341b) se fixe par un filetage (3411) sur la pièce moulée intérieur (482).

16. Mitigeur à régulation thermostatique selon au moins l'une des revendications 1 à 15, caractérisé en ce que le dispositif inverseur est hydraulique.

17. Mitigeur à régulation thermostatique selon la revendication 16, caractérisé en ce qu'une pièce en forme de pot (58) est fixée au tube de guidage et de maintien (37, 370) et le poussoir (341) agit sur un premier piston central (581) dans la pièce (58), alors qu'un piston annulaire (582) de plus grand diamètre est logé coaxialement dans la pièce (58), les chambres à fluide étant reliées derrière le piston central (581) et le piston annulaire (582) dans la pièce (58), et le piston annulaire (582) sort axialement de la pièce (58) et comporte une bride annulaire (5821) qui dépasse le diamètre de la pièce (58) et s'appuie contre un épaulement (211) de l'écrou de réglage (21), un ressort (583) étant prévu coaxialement au tube de maintien et de guidage (37, 370), ressort qui s'appuie d'un côté contre une collerette (373) du tube de guidage et de maintien (37, 370) et de l'autre côté contre une bride annulaire (5821), le piston annulaire (582) étant enfoncé dans le corps (58) et la précontrainte du ressort (583) étant supérieure à celle du ressort de rappel (35).

18. Mitigeur à régulation thermostatique selon la revendication 16 ou 17, caractérisé en ce qu'à la place du poussoir mécanique (341), il comporte une liaison hydraulique entre le thermostat et le dispositif dé renvoi.
